# EUROPEAN PATENT APPLICATION

(11) **EP 2 174 919 A2**
(43) Date of publication of application: **14.04.2010**
(21) Application number: 09170566.5
(22) Date of filing: 17.09.2009
(51) Int. Cl.: C03B 33/12

(54) **Brittle material pliers**

(30) Priority: 07.10.2008 JP 2008261001; 08.10.2008 JP 2008262030
(71) Applicant: Mitsuboshi Diamond Industrial Co., Ltd., Suita-city, Osaka 564-0044 (JP)
(72) Inventor: Maekawa, Kazuya, Suita-city Osaka 564-0044 (JP); Sakaguchi, Ryota, Suita-city Osaka 564-0044 (JP)
(74) Representative: TBK-Patent

(57) **Abstract**

The present invention is intended to improve the quality of glass cut surfaces and to improve the yield when a glass plate is cut.

Glass pliers (1) comprise a first lever (2) and a second lever (3). The first lever (2) has a glass pressing component (15) at a distal end and a grip (5) at a rear end. The second lever (3) has a glass holder (25) at a distal end and a grip (10) at a rear end, the second lever being turnably supported on the first lever (2). The glass holder (25) has an elastically deformable elastic plate (26) having less rigidity than the glass plate and extending a predetermined length in a left-to-right direction which intersects the cut groove, and an elastic plate support part (27) for supporting the left and right ends of the elastic plate (26) relative to the second lever (3). The glass pressing component (15) has a pressing plate (16a) for applying a distributed load wider than the groove width of the cut groove to the glass plate.

## Description

### TECHNICAL FIELD

The present invention relates to brittle material pliers, and particularly to brittle material pliers for segmenting brittle material in which a segmenting groove is formed.

### BACKGROUND ART

In cases in which a glass plate or another brittle material is segmented, generally a segmenting groove (scribe line, or score line) is formed in the glass plate by a scribing wheel formed from a superhard alloy or sintered diamond (polycrystalline diamond: PCD), or a glass-cutting tool having a diamond tip at the distal end; and the material is segmented by bending to the sides of the segmenting groove. When this glass plate is bent, a hand tool for breaking glass is used, such as the one disclosed in Japanese Laid-open Patent Application No. 2000-44266, for example.

A conventional tool such as the one disclosed in the aforementioned publication has a tool main body and either a lever or a pair of levers. The distal end of one lever is provided with a glass holder, and the distal end of the other lever is provided with a glass-pressing part. The glass holder is provided with a pair of convex parts for supporting both sides of the scribe line in the top surface of a glass plate, and the glass-pressing part is provided with one convex part for pressing on the bottom surface of the glass plate directly beneath the scribe line.

Using a tool such as is described above, the glass plate is held on both sides by the glass holder and the glass-pressing part and the levers are swingably operated, whereby the scribe line of the glass plate is subjected to pressing force from the convex part of the glass-pressing part and both sides of the scribe line are supported, thereby bending and segmenting the glass plate.

### DISCLOSURE OF THE INVENTION

Conventional tools for segmenting glass or another brittle material, including those described in the aforementioned conventional publication, are intended to support both sides of the scribe line on the top surface of the glass plate and to apply upward force from directly below the scribe line, segmenting the glass plate as previously described. In other words, the glass plate is supported at three top and bottom points and segmented.

In cases in which a glass plate has been segmented, the segmented surfaces must be flat surfaces orthogonal to the glass surface. However, when a glass plate is segmented using a conventional tool, there are cases in which the segmented surfaces are inclined instead of orthogonal in relation to the glass surface, or protuberances form in the segmented surfaces; and also cases in which the required quality cannot be achieved.

In cases in which a glass plate has been bent using a conventional tool, the glass plate is made to split apart and is segmented instantly. The bottom ends of the segmented surfaces on both sides of the glass plate thereupon interfere with each other, and cracks, splits apart, and the like form, making the glass plate unsatisfactory.

Furthermore, a conventional tool for segmenting a glass plate while supporting the plate at three points has a problem in that the width of a glass plate that can be segmented is restricted by the supported width on the side having the glass holder.

An object of the present invention is to improve the quality of the segmented surfaces and to improve the yield in cases of segmenting a glass plate or another brittle material.

Another object of the present invention is to make it possible to segment brittle materials of less width.

According to the results of research, the inventors of the present invention have discovered that the primary cause of unsatisfactory segmented surfaces in the brittle material is that with a conventional tool, stress is concentrated in the scribe line by three-point support, i.e., force is concentrated and applied to the scribe line from the pressing part on the bottom surface of the brittle material, and the brittle material is bent and segmented so as to instantaneously split apart.

In view of this, the present invention is designed so that stress is not applied in a concentrated manner to the segmenting groove in brittle material in which a segmenting groove is formed, but a distributed load is applied to a predetermined range including the segmenting groove, the brittle material is bent, the rate of segmenting, i.e., the rate at which a crack forms along the segmenting groove is slowed, and the quality of the segmented surfaces of the brittle material is improved.

The brittle material pliers according to a first aspect of the present invention are brittle material pliers for segmenting brittle material in which a segmenting groove is formed, the brittle material pliers comprising a first lever and a second lever.

The first lever has a brittle material pressing component at a distal end and a grip at a rear end. The second lever has a brittle material holder at a distal end and a grip at a rear end, the second lever being turnably supported on the first lever. The brittle material holder has an elastically deformable elastic plate having less rigidity than the brittle material and extending a predetermined length in a left-to-right direction which intersects the segmenting groove, and an elastic plate support part for supporting the left and right ends of the elastic plate relative to the second lever. The brittle material pressing component has a pressing part for applying a distributed load wider than the groove width of the segmenting groove to the brittle material.

With these brittle material pliers, brittle material in which a segmenting groove is formed is supported by the brittle material holder of the second lever, pressed by the brittle material pressing component of the first lever, and bent and segmented. At this time, the surface on one side of the brittle material is covered by the elastic plate of the brittle material holder, and the surface on the other side of the brittle material is subjected to a distributed load by the brittle material pressing component over a predetermined width including the segmenting groove.

By using such brittle material pliers and segmenting a brittle material, the brittle material can be segmented at a slower rate than in a case of using a conventional tool. More specifically, the rate at which a crack forms along the segmenting groove is slower, and the rate at which a crack forms by operating the brittle material pliers can also be controlled. Therefore, the material can be prevented from bending and segmenting so as to split apart as in conventional practice. As a result, it is possible to minimize interference between the segmented surfaces on both sides of the brittle material, as well as cracking or splitting in the brittle material segmented surfaces, the quality of the brittle material segmented surfaces can be improved, and yield can be improved.

Furthermore, with these brittle material pliers, since a brittle material holder is formed in the elastic plate and the elastic plate support part, the pliers are not subject to the restriction that "the width of brittle material that can be segmented must be greater than the distance between the pair of support parts of the brittle material holder," as is the case with a conventional three-point tool. However, the pliers are subject to the limit that the width of the brittle material being segmented must be "equal to or greater than the width of the brittle material pressing component."

The brittle material pliers according to a second aspect of the present invention are the brittle material pliers according to the first aspect, wherein the pressing part has a pressing plate formed shorter than the elastic plate in the left-to-right direction and having greater rigidity than the brittle material being segmented, and the brittle material pressing component further has a pressing plate support part for supporting the pressing plate relative to the first lever.

The brittle material is herein pressed by the highly rigid pressing plate. The pressing plate is supported by the pressing plate support part.

In this case, since the pressing plate is more rigid than the brittle material, deformation of the pressing plate is minimized when the brittle material is pressed, and a distributed load can be applied evenly to the brittle material.

The brittle material pliers according to a third aspect of the present invention are the brittle material pliers according to the first or second aspect, wherein the pressing part has a pressing plate formed shorter than the elastic plate in the left-to-right direction, and the brittle material pressing component further has a pressing plate support part for supporting the pressing plate relative to the first lever. The pressing plate support part has a pressure shaft provided to the distal end of the first lever and extending in the left-to-right direction, and a pair of first support members for supporting the left and right ends of the pressing plate, the first support members being mounted on the pressure shaft.

The brittle material is herein pressed by the pressing plate. The left and right ends of the pressing plate are supported on the first lever by the first support members. Therefore, deformation of the pressing plate can be minimized even in cases in which the pressing plate has low rigidity, because the left and right ends of the pressing plate are supported by the pair of first support members. Therefore, a distributed load can be applied evenly to the brittle material.

The brittle material pliers according to a fourth aspect of the present invention are the brittle material pliers according to the third aspect, wherein the pressing plate is capable of turning around the axial center of the pressure shaft.

Since the first and second levers are turnably joined together, the distal ends of the levers move in arcuate trajectories. In this case, if both the brittle material holder and the brittle material pressing component are turnably fixed to the levers, their contact surfaces will not be entirely in contact with the surface of the brittle material.

In view of this, in the fourth aspect, the pressing part is capable of turning around the axial center of the pressure shaft, and the entire surfaces of the brittle material holder and the brittle material pressing component are in contact with the surface of the brittle material.

The brittle material pliers according to a fifth aspect of the present invention are the brittle material pliers according to the fourth aspect, further comprising a turning regulator for regulating the turning of the pressing part to within a predetermined angle range.

When the pressing part is capable of turning and a large turning range is set as is the case with the brittle material pliers according to the fourth aspect, there are cases in which the orientation of the pressing plate is not established and the surface of the pressing plate in contact with the brittle material faces in the opposite direction of the brittle material. In this case, the operator must perform an operation for causing the pressing plate or the pressing plate support part to face the brittle material, and the operation of segmenting the brittle material becomes troublesome.

In view of this, in the fifth aspect, the turning of the pressing part is regulated by the turning regulator, and the pressing plate is prevented from turning in the opposite direction of the brittle material, for example. The operation of holding the brittle material on both sides by the brittle material pliers is thereby made easier.

The brittle material pliers according to a sixth aspect of the present invention are the brittle material pliers according to any of the first through fifth aspects, wherein the elastic plate support part has a support shaft provided at the distal end of the second lever and extending in the left-to-right direction, and a pair of second support members for supporting the left and right ends of the elastic plate, the second support members being mounted on the support shaft.

The left and right ends of the elastic plate are herein supported on the second lever via the pair of second support members and the support shaft. Therefore, the elastic plate can be reliably supported on the second lever.

The brittle material pliers according to a seventh aspect of the present invention are the brittle material pliers according to any of the first through sixth aspects, wherein the elastic plate support part is configured so as to be capable of turning around the axial center of the support shaft.

The brittle material pliers according to an eighth aspect of the present invention are the brittle material pliers according to any of the first through seventh aspects, further comprising a brittle material positioning member for positioning the brittle material inserted between the pressing plate and the brittle material pressing component, the brittle material positioning member being provided to the first lever or the second lever.

The position of the brittle material can herein be established by the brittle material positioning member in cases in which the brittle material is held on both sides by the brittle material pliers. Since the brittle material positioning member is provided between the pressing plate member and the brittle material pressing component, i.e., between the distal end of the first lever and the distal end of the second lever, a predetermined gap can be ensured between the distal ends of the levers even when the levers are brought together, the operator is prevented from catching their fingers between the first and second grips, and safety is improved. The pressing part is also prevented from coming in firm contact with the elastic plate and damaging the elastic plate.

The brittle material pliers according to a ninth aspect of the present invention are brittle material pliers for segmenting brittle material along a segmenting groove formed in a primary surface of the brittle material, the brittle material pliers comprising a first lever and a second lever.

The first lever has a brittle material pressing component at a distal end and a grip at a rear end. The second lever has a brittle material holder at a distal end and a grip at a rear end, the second lever being turnably supported on the first lever. The brittle material pressing component has a pressing plate and a pressing plate support part. The pressing plate is an elastically deformable plate having less rigidity than the brittle material and being capable of coming in contact with the primary surface of the side of the brittle material plate on which the segmenting groove is not formed. The pressing plate support part supports the pressing plate on the first lever and presses the pressing plate against the brittle material. The brittle material holder has an elastic plate and an elastic plate support part. The elastic plate is an elastically deformable plate capable of coming in contact with the primary surface of the side of the brittle material on which the segmenting groove is not formed, extending a predetermined length in a left-to-right direction intersecting the segmenting groove, and having less rigidity than the brittle material. The elastic plate support part supports the left and right ends of the elastic plate on the second lever.

With these brittle material pliers, brittle material having a segmenting groove formed therein is supported by the brittle material holder of the second lever and is pressed, bent, and segmented by the brittle material pressing component of the first lever. At this time, both sides of the brittle material are pressed, bent, and segmented via the elastically deformable pressing plate and elastic plate, which are less rigid than the brittle material.

By using such brittle material pliers and segmenting a brittle material, the brittle material can be segmented at a slower rate than in a case of using a conventional tool. More specifically, concentration of stress in the segmenting groove can be avoided when the brittle material is being segmented, and the impact is absorbed by the elastically deformable pressing plate when the brittle material is bent and segmented. Therefore, the rate at which a crack forms along the segmenting groove is slower, and the rate at which a crack forms by operating the brittle material pliers can also be controlled. Therefore, the material can be prevented from bending and segmenting so as to split apart as in conventional practice. As a result, it is possible to minimize interference between the segmented surfaces on both sides of the brittle material, as well as cracking or splitting in the brittle material segmented surfaces, the quality of the brittle material segmented surfaces can be improved, and yield can be improved.

Furthermore, with these brittle material pliers, since a brittle material holder holds the brittle material through the elastic plate, the pliers are not subject to the restriction that "the width of brittle material that can be segmented must be greater than the distance between the pair of support parts of the brittle material holder," as is the case with a conventional three-point tool.

The brittle material pliers according to a tenth aspect of the present invention are the brittle material pliers according to the ninth aspect, wherein the pressing plate support part has a single first support member for supporting the left-to-right center of the pressing plate, and the elastic plate support part has a pair of second support members for supporting the left and right sides of the elastic plate.

In this case, the brittle material is supported by the first and second support members, but the support members support the brittle material via the pressing plate. Therefore, concentration of stress in the segmenting groove can be avoided when the brittle material is being segmented, and the impact is absorbed by the elastically deformable pressing plate when the brittle material is bent and segmented. Therefore, segmenting such that the material splits apart as with a conventional tool can be suppressed, the quality of the brittle material segmented surfaces can be improved, and yield can be improved.

The brittle material pliers according to an eleventh aspect of the present invention are the brittle material pliers according to the ninth or tenth aspect, wherein the pressing plate support part further has a pressure shaft for turnably supporting the first support member on the first lever, the pressure shaft being provided so as to extend to the left and right at the distal end of the first lever.

Since the first and second levers herein are turnably linked together, the distal ends of the levers move in arcuate trajectories. In this case, if both the brittle material holder and the brittle material pressing component are turnably fixed to the levers, their contact surfaces will not be entirely in contact with the surface of the brittle material.

In view of this, in the eleventh aspect, the first support member for supporting the pressing plate is capable of turning relative to the first lever, and the entire surfaces of the brittle material holder and the brittle material pressing component are in contact with the surface of the brittle material.

The brittle material pliers according to a twelfth aspect of the present invention are the brittle material pliers according to the eleventh aspect, further comprising a turning regulator for regulating the turning of the first support member to within a predetermined angle range.

When the first support member is capable of turning and a large turning range is set as is the case with the brittle material pliers according to the eleventh aspect, there are cases in which the orientation of the pressing plate is not established and the surface of the pressing plate in contact with the brittle material faces in the opposite direction of the brittle material. In this case, the operator must perform an operation for causing the pressing plate or the first support member to face the brittle material, and the operation of segmenting the brittle material becomes troublesome.

In view of this, in the twelfth aspect, the turning of the first support member is regulated by the turning regulator, and the pressing plate is prevented from turning in the opposite direction of the brittle material, for example. The operation of holding the brittle material on both sides by the brittle material pliers is thereby made easier.

The brittle material pliers according to a thirteenth aspect of the present invention are the brittle material pliers according to any of the ninth through twelfth aspects, further comprising a brittle material positioning member for positioning the brittle material inserted between the pressing plate and the elastic plate, the brittle material positioning member being provided to the first lever or the second lever.

The position of the brittle material can herein be established by the brittle material positioning member in cases in which the brittle material is held on both sides by the brittle material pliers. Since the brittle material positioning member is provided between the distal end of the first lever and the distal end of the second lever, a predetermined gap can be ensured between the distal ends of the levers even when the levers are brought together, the operator is prevented from catching their fingers between the first and second grips, and safety is improved. The pressing part and the elastic plate are also prevented from coming in firm contact and damaging each other.

The brittle material pliers according to a fourteenth aspect of the present invention are the brittle material pliers according to the tenth aspect, wherein the elastic plate support part has a support shaft provided at the distal end of the second lever and extending in the left-to-right direction, and the elastic plate support part is capable of turning around the axial center of the support shaft.

In the present invention, the term "segmenting groove" refers to a scribe line formed using a scribing wheel normally used in the scribing of brittle material and thermal stress through a laser or other irradiation; or a guideline for dividing brittle material by segmenting, the guideline including a cutout groove for segmenting formed by dicing using a grind stone.

In the present invention, the term "segmenting" refers to a machining process for dividing brittle material along a scribe line or cutout groove formed in the primary surface of the brittle material.

In the present invention, the term "brittle material" includes architectural glass, window glass for automobiles, FPDs and other glass circuit substrates, ceramics of sintered materials, monocrystalline silicon, semiconductor wafers, ceramic substrates, sapphire substrates, building stones, and the like.

### BRIEF DESCRIPTION OF THE DRAWINGS

FIG. 1 is a front view of glass pliers according to the first embodiment of the present invention;
FIG. 2 is a left side view of the glass plies;
FIG. 3 is a bottom partial view of the glass pliers;
FIG. 4 is a partial plan view of the glass pliers;
FIG. 5 is a left side view of glass pliers according to a modification of the first embodiment;
FIG. 6 is a bottom partial view of the glass pliers;
FIG. 7 is a left side view of glass pliers according to another modification of the first embodiment;
FIG. 8 is a bottom partial view of the glass pliers;
FIG. 9 is a front view of glass pliers according to the second embodiment of the present invention;
FIG. 10 is a left side view of the glass pliers;
FIG. 11 is a bottom partial view of the glass pliers; and
FIG. 12 is a front view of glass pliers in which an additional embodiment of the present invention is applied.

### BEST MODE FOR CARRYING OUT THE INVENTION

### -I. First Embodiment-

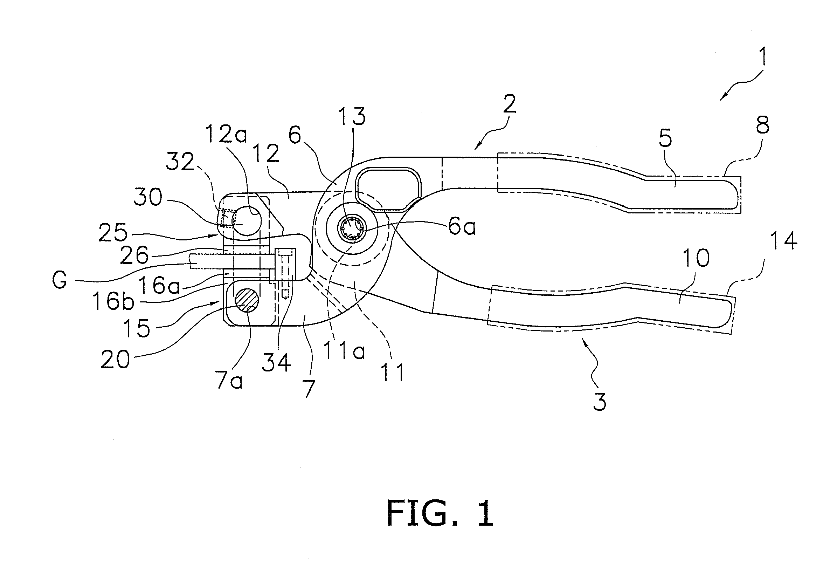

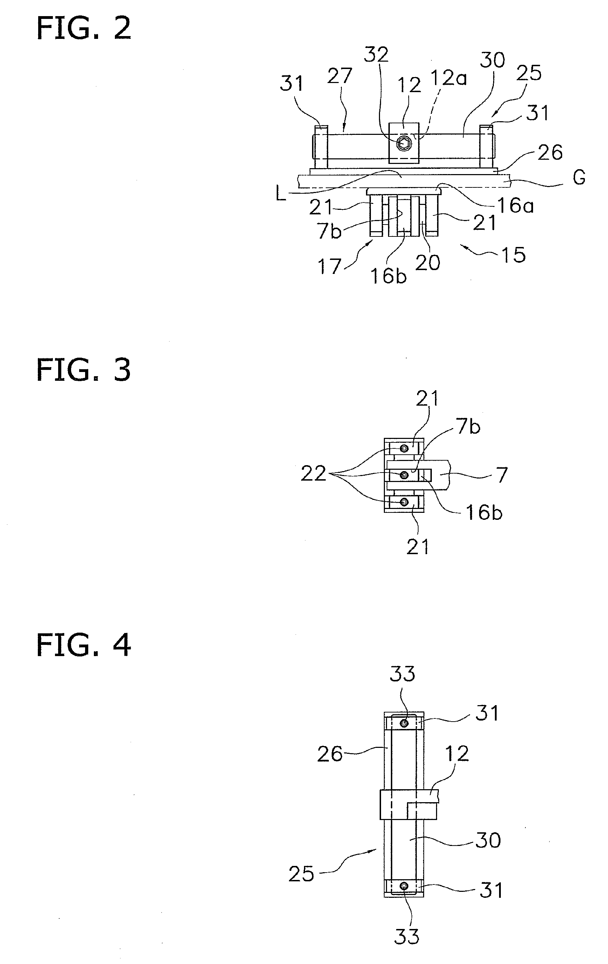

FIG. 1 shows brittle material pliers (hereinbelow referred to as glass pliers) commonly applied to glass or another brittle material according to an embodiment of the present invention. The glass pliers 1 are a tool for segmenting a glass plate G in which a segment groove (a scribe line or a groove cut out by dicing) is formed, and the glass pliers 1 have a first lever 2 and a second lever 3. A scribe line L as the segment groove is herein shown only in FIG. 2 and is omitted from the other drawings.

### [First Lever]

The first lever 2 is a single member having a grip 5, a support part 6, and a distal end 7, which are integrated in continuous fashion. A grip cover 8 is provided extending from the end of the grip 5 toward the support part 6. This grip cover 8 is provided so that an operator can easily operate the pliers by hand. The support part 6 is bent from the distal end of the grip 5 at an angle of substantially 90°. In the substantial center of the support part 6, a support hole 6a for turning is formed in a direction orthogonal to the direction in which the first lever 2 extends. The distal end 7 is bent another 90° from the distal end of the support part 6 and is formed substantially parallel to the grip 5. A pressing component support hole 7a is formed in the distal end 7, parallel to the turning support hole 6a.

### [Second Lever]

The second lever 3 is a single member having a grip 10, a support part 11, and a distal end 12, which are integrated in continuous fashion similar to the first lever 2. A grip cover 14 is provided from the end of the grip 10 extending toward the support part 11. This grip cover 13 is provided so that an operator can easily operate the pliers by hand. The support part 11 is formed extending so as to gradually increase in width from the distal end of the grip 10, and a support hole 11a is formed in the support part 11 in the same position and same direction as the support hole 6a of the first lever 2. The distal end 12 is made to extend further from the distal end of the support part 11 and is formed substantially parallel to the grip 10. A holder support hole 12a is formed parallel to the support hole 11a in the distal end 12. A support pin 13 is then inserted through the support hole 6a of the first lever 2 and the support hole 11a of the second lever 3, whereby the first lever 2 and the second lever 3 are capable of turning relative to each other.

### [Glass-Pressing Component]

A glass-pressing component 15 is provided at the distal end 7 of the first lever 2. The glass-pressing component 15 is a member provided in order to press on the glass plate G from below, and this component has a pressing plate 16a as a pressing part, and a pressing plate support part 17, as shown in FIG. 2. FIG. 2 is a left side view of FIG. 1; i.e., a drawing of the glass pliers 1 as seen from the distal end.

### <Pressing Part = Pressing Plate>

The pressing plate 16a is intended to apply a distributed load to the glass plate G in which the scribe line is formed, the load being applied over a wider range than the groove width of the scribe line. The pressing plate 16a has a predetermined width in both the longitudinal direction of the first lever 2 (the direction in which the scribe line is formed; hereinbelow referred to as front-to-back direction) and the direction orthogonal thereto (direction orthogonal to the scribe line; hereinbelow referred to as left-to-right direction). The pressing plate 16a is preferably formed from stainless steel more rigid than glass, SK (tool steel), or another material, but is not particularly limited to these materials. In this embodiment, the left-to-right width of the pressing plate 16a is formed to be greater than the width of the distal end 12 of the second lever 3 and less than the width of the glass holder, described hereinafter.

### <Pressing Plate Support Part>

The pressing plate support part 17 is intended to support the pressing plate 16a on the distal end 7 of the first lever 2. The pressing plate support part 17 has an attaching part 16b, a pressure shaft 20, and a pair of first support members 21.

The attaching part 16b is a plate-shaped member extending downward from the bottom surface of the pressing plate 16a and is formed integrally with the pressing plate 16a. A hole passing through the left-to-right direction is formed in the attaching part 16b, and the pressure shaft 20 is inserted through this hole. A slit 7b opening forward is formed in the distal end 7 of the first lever 2 as can be seen from FIG. 3, and the attaching part 16b is fitted into this slit 7b.

The pressure shaft 20 is a shaft of substantially the same length as the pressing plate 16a, and is passed through the through-hole in the attaching part 16b and the pressing component support hole 7a formed in the distal end 7 of the first lever 2.

The pair of first support members 21 are members for supporting the left and right ends of the pressing plate 16a, and these members have substantially the same shape as the attaching part 16b. Through-holes are formed in both of the pair of first support members 21, through which the pressure shaft 20 is passed. The left and right ends of the pressing plate 16a are supported by the pair of first support members 21, whereby it is possible to prevent deformation in the pressing plate 16a during the segmenting of a glass plate.

### [Turning Regulator]

In the bottom ends of the attaching part 16b and the pair of first support members 21, screw holes facing upward are formed through the holes of these members. Screw members 22 are then threaded through these screw holes as shown in FIG. 3, and the configuration is designed so that the pressure shaft 20 is pressed by the distal ends of the screw members, whereby the attaching part 16b and the pair of first support members 21 do not rotate relative to the pressure shaft 20. FIG. 3 is a drawing of the pressing plate support part 17 as seen from below. The pressure shaft 20 is free to turn relative to the pressing component support hole 7a formed in the distal end 7, and the entire glass-pressing component 15 is therefore free to turn relative to the distal end 7 of the first lever 2.

When the glass-pressing component 15 turns, the attaching part 16b comes in contact with the rear end of the slit 7b, and the turning of the glass-pressing component 15 is therefore regulated to a predetermined angle range. In other words, a turning regulator is obtained in which the turning of the pressing plate support part 17, and hence the glass-pressing component 15, is regulated to within a predetermined angle range by the attaching part 16b and the slit 7b.

### [Glass Holder]

The distal end 12 of the second lever 3 is provided with a glass holder 25, as can be seen from FIGS. 1 and 2. The glass holder 25 has an elastic plate 26 and an elastic plate support part 27.

### <Elastic Plate>

The elastic plate 26 is an elastically deformable member extending a predetermined length to the left and right and having less rigidity than the glass plate G. In this embodiment, the elastic plate 26 is formed longer than the pressing plate 16a in the left-to-right direction, but at substantially the same length as the pressing plate 16a in the front-to-back direction. The elastic plate 26 is preferably formed from polyacetal, vinyl chloride, polyethyl ketone, or another resin, but is not particularly limited to these materials.

### <Elastic Plate Support Part>

The elastic plate support part 27 supports the left and right ends of the elastic plate 26 in relation to the second lever 3, and has a support shaft 30 and a pair of second support members 31.

The support shaft 30 has substantially the same left-to-right length as the elastic plate 26. The support shaft 30 passes through the holder support hole 12a formed in the distal end 12 of the second lever 3. The pair of second support members 31 are substantially rectangular plate members, and the bottom surfaces thereof are fixed to the left and right ends of the elastic plate 26. Through-holes are formed in the second support members 31, and the support shaft 30 passes via these through-holes.

In the distal end 12 of the second lever 3, a screw hole directed backward from the front end surface is formed through the holder support hole 12a. A screw member 32 is threaded through this screw hole, and the support shaft 30 is pressed by the distal end of the screw member. Through-running screw holes directed downward from the top surfaces of the pair of second support members 31 are formed in the same manner all the way to the through-holes, as can be seen from FIG. 4. Screw members 33 are threaded through these screw holes, and the support shaft 30 is pressed by the distal ends of the screw holes. FIG. 4 is a drawing of the glass holder 25 as seen from above.

The above-described configuration is designed so that the elastic plate 26 and the elastic plate support part 27 including the support shaft 30 do not rotate relative to the distal end 12 of the second lever 3.

### [Glass-Positioning Member]

A glass-positioning member 34 is provided behind the glass-pressing component 15 in the distal end 7 of the first lever 2, as shown in FIG. 1. The glass-positioning member 34 is a block-shaped member formed from a resin or the like, and is fixed to the first lever 2 by a screw member. The end surface of the glass plate G is brought in contact with the glass-positioning member 34, whereby the relative positions of the glass plate G and the glass pliers 1 can be set with precision. Since the glass-positioning member 34 has a predetermined height, the bottom surface of the distal end 12 of the second lever 3 comes in contact with the glass-positioning member 34 when the grips 5, 10 are brought close together to a certain extent. Therefore, a specified gap can be ensured between the grips 5, 10, and safety can be improved. FIG. 1 shows a state in which the end surface of the glass plate G has come in contact with the glass-positioning member 34.

The glass-positioning member 34 may be mounted to the turnable glass-pressing component 15.

### [Glass-Segmenting Action]

The glass pliers 1 are used to segment a glass plate in which a scribe line is formed. The scribe line is preferably formed by a scribing wheel normally used in the scribing of brittle material, by thermal stress through irradiation with a laser or the like, or by another method; but the means for forming the scribe line is not limited.

During segmenting, the end surface of the glass plate G is held on both sides by the glass pliers 1 so that the surface in which the scribe line L is formed is positioned facing the elastic plate 26 as shown in FIG. 2, and the scribe line is set so as to be positioned in the left-to-right center of the pressing plate 16a. At this time, the end surface of the glass plate G is brought in contact with the glass-positioning member 34 of the glass pliers 1, whereby the relative positions of the glass plate G and the glass pliers 1 can be correctly set.

Segmenting force can be applied upward by the glass-pressing component 15 to the bottom surface of the glass plate G. This is achieved by setting the glass pliers 1 on the end surface of the glass plate G as described above, grasping the grips 5, 10 of the levers 2, 3 of the glass pliers 1, and operating the grips so as to bring them closer together.

At this time, since the pressing plate 16a has a predetermined width in the left-to-right direction, a distributed load acts on the location where the scribe line is formed, unlike a concentrated load in the case of conventional glass pliers 1. Moreover, since the pressing plate 16a does not deform when the above-described operation is performed, an evenly distributed load is applied across the width of the pressing plate 16a.

When the top surface of the glass plate G is covered by the elastic plate 26 and an evenly distributed load such as is previously described is applied, the elastic plate 26 also deforms along with the deformation of the glass plate G. A crack then forms along the scribe line, and the glass plate G is segmented.

### [Characteristics]

(1) During the glass-segmenting action as described above, an evenly distributed load is applied from the bottom surface of the glass plate G to a predetermined area including the scribe line, and the top surface of the glass plate G is covered by the elastic plate 26. The crack therefore forms at a slower rate than in a conventional case. In other words, the segmenting operation in which a crack instantly splits open as in conventional practice is replaced with on operation in which a crack forms slowly. Therefore, the segmented surfaces of the glass plate G are formed in a satisfactory manner, the glass segmented surfaces on both sides can be restrained from interfering with each other and creating chips or splits in the glass segmented surfaces, the quality of the glass segmented surfaces can be made higher, and the yield can be improved.
(2) With these glass pliers 1, the glass plate G can be segmented as long as the glass plate is wider than the pressing plate 16a, and the glass plate G is not limited to the supporting width of glass holder as is the case with a conventional three-point support tool.
(3) Since the pressing plate 16a is supported at both ends by the pair of first support members 21, deformation of the pressing plate 16a can be reliably suppressed. Therefore, the thickness of the pressing plate 16a can be reduced.
(4) Since the pressing plate support part 17 is capable of turning, the entire contact surfaces of the glass holder and the glass-pressing component can be brought in contact with the surface of the glass plate G. Moreover, since the turning of the pressing plate support part 17 is regulated to a predetermined angle range, the operation of holding the glass plate G from both sides with the glass pliers 1 is simplified.
(5) The glass-positioning member 34 allows not only the glass plate G to be positioned, but also allows a predetermined gap to be ensured between the distal ends of the levers 2, 3, and safety to be improved.

To allow the scribe line to be easily positioned in the left-to-right center of the pressing plate 16a, a center position display mark may be created in a location easily visible to the operator in the pressing plate 16a and/or the elastic plate 26 so that the surface in which the scribe line L is formed is positioned facing the elastic plate 26 when the end surface of the glass plate G is held on both sides by the glass pliers 1.

### [Modifications of First Embodiment]

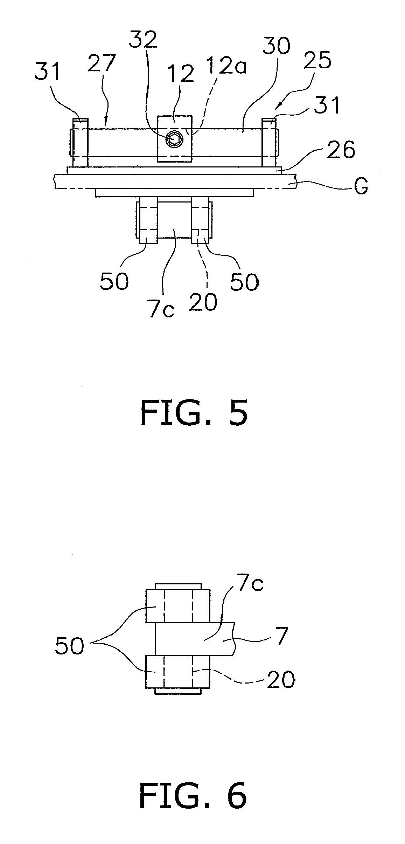

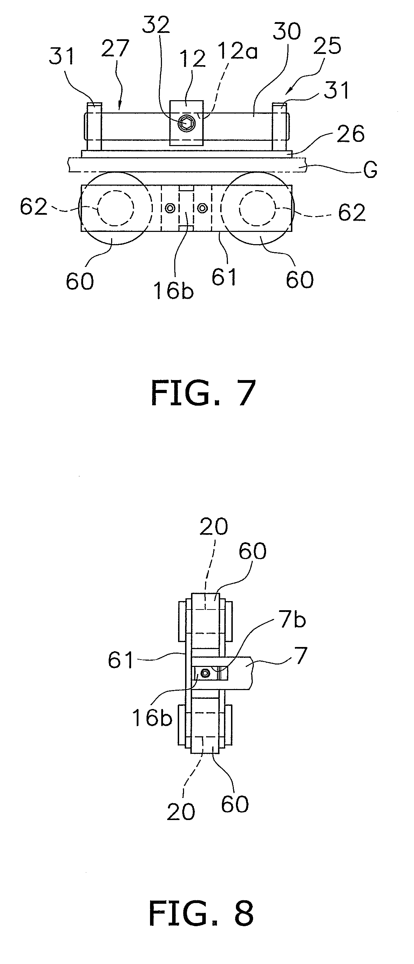

(a) In the embodiment previously described, a pair of first support members 21 was provided at both ends of the pressing plate 16a, but in cases in which the pressing plate is formed to a greater thickness and is made more rigid, it is acceptable to provide only one first support member, i.e., to provide support at only the attaching part in the embodiment previously described.
   In the embodiment previously described, the glass-positioning member 34 was provided at the distal end of the first lever 2, but the glass-positioning member 34 may also be provided at the distal end of the second lever 3.
(b) In the embodiment previously described, a configuration was used in which the glass plate G was pressed via the pressing plate 16a, but another option is a configuration in which the glass plate G is pressed via a pair of rollers 50 axially supported at both ends of the pressure shaft 20 to be capable of turning about the axial center of the pressure shaft 20, which is mounted at the distal end 7c of the first lever 2, as shown in FIGS. 5 and 6.
   In this case, the turning regulator provided between the pressing plate support part 17 and the distal end 7c of the first lever 2 is not necessary, and the configuration is therefore simplified.
(c) In the embodiment previously described, a configuration was used in which the glass plate G was pressed via the pressing plate 16a, but another option is a configuration in which the glass plate G is pressed via a pair of rollers 60 on a roller support member 61 mounted on the distal end 7b of the first lever 2, as shown in FIGS. 7 and 8.
   The rollers 60 are herein axially supported to be capable of turning about axial centers of support shafts 62 having axes in a direction orthogonal to the axis of the support shaft 30 of the elastic plate support part 27.
(d) In the embodiment previously described, a configuration was used in which the glass plate G was pressed via the pressing plate 16a supported by the pair of first support members 21, but another option is a configuration in which the pressing plate 16a is omitted and the glass plate G is pressed via the pair of first support members 21.

### -II. Second Embodiment-

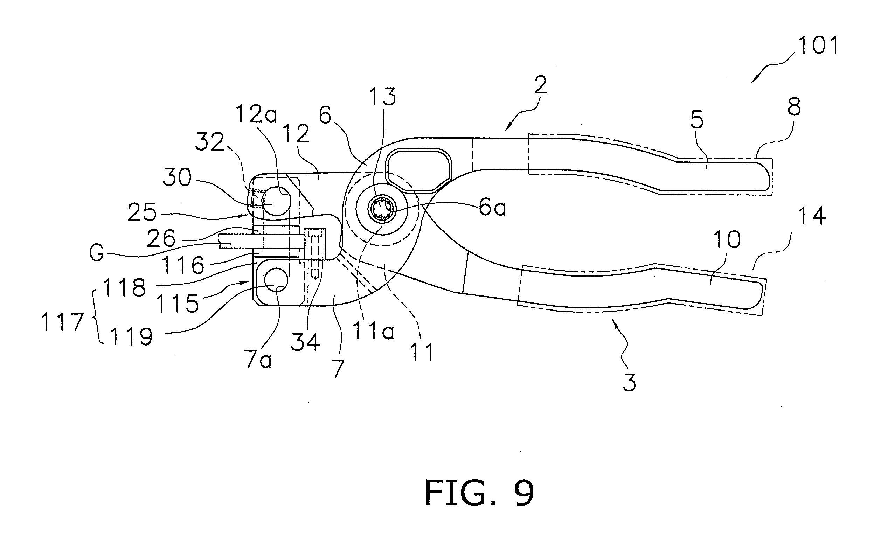

FIGS. 9 through 11 show glass pliers 101 according to the second embodiment of the present invention. The glass pliers 101 of the second embodiment have a different glass-pressing component and turning regulator from those of the first embodiment, whereas the configuration of the first lever 2, the second lever 3, the glass holder 25, and the glass-positioning member 34 is the same as the first embodiment. Therefore, the components similar to those of the first embodiment are denoted by the same reference symbols in the drawings and are not described.

### [Glass-Pressing Component]

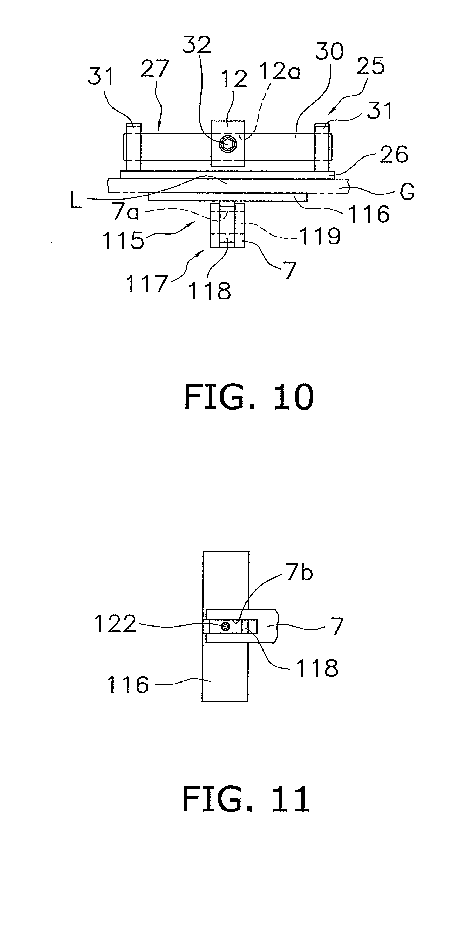

A glass-pressing component 115 as a brittle material-pressing component is provided to the distal end 7 of the first lever 2. The glass-pressing component 115 is a component provided in order to apply pressure to the glass plate from below, and this component has a pressing plate 116 and a pressing plate support part 117 as shown in FIG. 10. FIG. 10 is a left side view of FIG. 9, i.e., a drawing of the glass pliers 101 as seen from the distal end side.

### <Pressing Plate>

The pressing plate 116 is a plate for supporting the bottom surface of a glass plate in which a scribe line is formed, and the pressing plate 116 has a predetermined width in both the longitudinal direction of the first lever 2 (the direction in which the scribe line is formed; hereinbelow referred to as the front-to-back direction) and in the direction orthogonal thereto (the direction orthogonal to the scribe line; hereinbelow referred to as the left-to-right direction). The pressing plate 116 is made of an elastically deformable material having less rigidity than the glass plate, and is preferably formed from, e.g., polyacetal, vinyl chloride, polyethyl ketone, or another resin, but is not particularly limited to these materials. In the second embodiment, the left-to-right width of the pressing plate 116 is formed to be greater than the width of the distal end 12 of the second lever 3 and less than the width of the elastic plate 26 of the glass holder 25.

### <Pressing Plate Support Part>

The pressing plate support part 117 is intended to support the pressing plate 116 on the distal end 7 of the first lever 2. The pressing plate support part 117 has a first support member 118 and a pressure shaft 119.

The first support member 118 is a plate-shaped member extending downward from the bottom surface of the pressing plate 116, and is formed integrally with the pressing plate 116. A hole passing through the left-to-right direction is formed in the first support member 118, and the pressure shaft 119 is passed through this hole. A slit 7b opening forward is formed in the distal end 7 of the first lever 2 as can be seen from FIG. 11, and the first support member 118 is fitted into this slit 7b.

The pressure shaft 119 is a shaft of substantially the same length as the distal end 7 of the first lever 2, and is passed through a through-hole in the first support member 118 and the pressing component support hole 7a formed in the distal end 7 of the first lever 2.

### [Turning Regulator]

In the bottom end of the first support member 118, a screw hole facing upward is formed through the hole in the first support member 118. A screw member 122 is then threaded through this screw hole as shown in FIG. 11, and the configuration is designed so that the pressure shaft 119 is pressed by the distal end of the screw member, whereby the first support member 118 does not rotate relative to the pressure shaft 119. FIG. 11 is a view of the pressing plate support part 117 as seen from below. The pressure shaft 119 is free to turn relative to the pressing component support hole 7a formed in the distal end 7, and the entire glass-pressing component 115 is therefore free to turn relative to the distal end 7 of the first lever 2.

When the glass-pressing component 115 turns, the first support member 118 comes in contact with the rear end of the slit 7b, and the turning of the glass-pressing component 115 is therefore regulated to a predetermined angle range. In other words, a turning regulator is obtained in which the turning of the pressing plate support part 117, and hence the glass-pressing component 115, is regulated to within a predetermined angle range by the first support member 118 and the slit 7b.

### [Glass-Segmenting Action]

The glass-segmenting action is essentially the same as in the first embodiment. Specifically, during segmenting, the end surface of the glass plate G is held on both sides by the glass pliers 101 so that the surface in which the scribe line L is formed is positioned facing the elastic plate 26 as shown in FIG. 10, and the scribe line L is set so as to be positioned in the left-to-right center of the elastic plate 26. At this time, the end surface of the glass plate G is brought in contact with the glass-positioning member 34 of the glass pliers 101, whereby the relative positions of the glass plate G and the glass pliers 101 can be correctly set.

The glass pliers 101 are set on the end surface of the glass plate as described above, and the grips 5, 10 of the levers 2, 3 of the glass pliers 101 are grasped and operated so as to be brought closer together, whereby upward segmenting force is applied by the glass-pressing component 115 from the bottom surface of the glass plate while the top surface of the glass plate, i.e., the sides to the left and right of the scribe line, are supported by the glass holder 25. The glass plate is thereby bent at the scribe line and segmented.

At this time, the pressing force from the first lever 2 is applied directly beneath where the scribe line of the glass plate is formed, the pressing force being applied via the first support member 118 and the elastically deforming pressing plate 116. Therefore, unlike conventional glass pliers which use three-point support, the pressing force is restrained from concentrating and acting directly beneath the scribe line. The top surface of the glass plate is also covered by the elastic plate 26. Therefore, the glass plate is bent and segmented while the elastic plate 26 elastically deforms, and the impact created during the bending and breaking of the glass plate is lessened.

### [Characteristics]

The same action and effects as the first embodiment are obtained in the second embodiment as well.

### [Additional Embodiment 1]

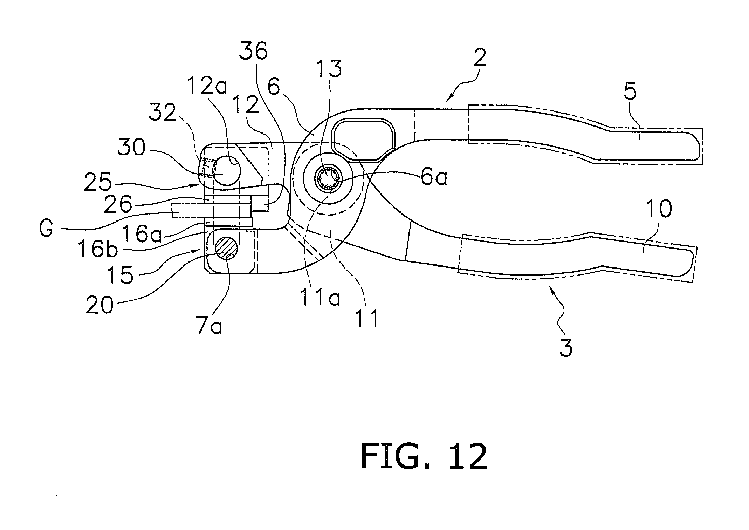

In the embodiments previously described, the glass-positioning member 34 was directly mounted on the distal end 7 of the first lever 2 positioned behind the glass-pressing component 15 or 115, but a glass-positioning member 36 may also be mounted on the glass holder 25 at the distal end 12 of the second lever 3, as shown in FIG. 12. The glass-positioning member 36 may also be mounted directly on the distal end 12 of the second lever 3.

As an additional mode, the glass-positioning member 36 may be mounted on the glass-pressing component 15 at the distal end 7 of the first lever 2.

### [Additional Embodiment 2]

In the embodiment shown in FIG. 12, the glass-positioning member 36 and the elastic plate 26 are formed from separate members, but they may also be integrally molded from an elastic member and mounted on the elastic plate support part 27.

The glass-positioning member 36 may be designed so that the dimensions of the member in the height direction of the drawing can be adjusted according to the thickness and other characteristics of the glass plate G

### [Additional Embodiment 3]

In the embodiments previously described, configurations were used in which the glass-pressing components 15, 115 were capable of turning about a pressure shaft, but the glass holder 25 may also be configured to be capable of turning about the axis of the support shaft 30. The glass-pressing components 15, 115 may be configured to be capable of turning about the pressure shaft, and the glass holder 25 may be configured to be capable of turning about the axis of the support shaft 30.

The present invention is intended to improve the quality of glass cut surfaces and to improve the yield when a glass plate is cut.

Glass pliers (1) comprise a first lever (2) and a second lever (3). The first lever (2) has a glass pressing component (15) at a distal end and a grip (5) at a rear end. The second lever (3) has a glass holder (25) at a distal end and a grip (10) at a rear end, the second lever being turnably supported on the first lever (2). The glass holder (25) has an elastically deformable elastic plate (26) having less rigidity than the glass plate and extending a predetermined length in a left-to-right direction which intersects the cut groove, and an elastic plate support part (27) for supporting the left and right ends of the elastic plate (26) relative to the second lever (3). The glass pressing component (15) has a pressing plate (16a) for applying a distributed load wider than the groove width of the cut groove to the glass plate.

## Claims

1. Brittle material pliers for segmenting brittle material in which a segmenting groove is formed, the brittle material being segmented along the segmenting groove, said brittle material pliers comprising:
a first lever (2) having a brittle material pressing component (15) at a distal end and having a grip (5) at a rear end; and
a second lever (3) having a brittle material holder (25) at a distal end having and a grip (10) at a rear end, the second lever being turnably supported on the first lever (2);
wherein the brittle material holder (25) has an elastically deformable elastic plate (26) having less rigidity than the brittle material and extending a predetermined length in a left-to-right direction which intersects the segmenting groove, and an elastic plate support part (27) for supporting the left and right ends of the elastic plate (26) relative to the second lever (3); and
wherein the brittle material pressing component (15) has a pressing part (16a) for applying a distributed load wider than the groove width of the segmenting groove to the brittle material.

2. The brittle material pliers as recited in claim 1, wherein
the pressing part (16a) has a pressing plate (16a) formed shorter than the elastic plate (26) in the left-to-right direction and having greater rigidity than the brittle material being segmented; and
the brittle material pressing component (15) further has a pressing plate support part (17) for supporting the pressing plate (16a) relative to the first lever (2).

3. The brittle material pliers as recited in claim 1, wherein
the pressing part (16a) has a pressing plate (16a) formed shorter than the elastic plate (26) in the left-to-right direction;
the brittle material pressing component (15) further has a pressing plate support part (17) for supporting the pressing plate (16a) relative to the first lever (2); and
the pressing plate support part (17) has a pressure shaft (20) provided to the distal end of the first lever (2) and extending in the left-to-right direction, and a pair of first support members (21) for supporting the left and right ends of the pressing plate (16a), the first support members being mounted on the pressure shaft (20).

4. The brittle material pliers as recited in claim 2 or 3, wherein the pressing plate (16a) is capable of turning around the axial center of the pressure shaft (20).

5. The brittle material pliers as recited in claim 4, further comprising a turning regulator (7b, 16b) for regulating the turning of the pressing plate (16a) to within a predetermined angle range.

6. The brittle material pliers as recited in any of claims 1 through 5, wherein the elastic plate support part (27) has a support shaft (30) provided at the distal end of the second lever (3) and extending in the left-to-right direction, and a pair of second support members (31) for supporting the left and right ends of the elastic plate (26), the second support members (31) being mounted on the support shaft (30).

7. The brittle material pliers as recited in any of claims 1 through 6, wherein the elastic plate support part (27) is capable of turning around the axial center of the support shaft (30).

8. The brittle material pliers as recited in any of claims 1 through 7, further comprising a brittle material positioning member (34) for positioning the brittle material inserted between the pressing plate (16a) and the brittle material pressing component (15), the brittle material positioning member being provided to the first lever (2) or the second lever (3).

9. Brittle material pliers for segmenting brittle material along a segmenting groove formed in a primary surface of the brittle material, said brittle material pliers comprising:
a first lever (2) having a brittle material pressing component (115) at a distal end and having a grip (5) at a rear end; and
a second lever (3) having a brittle material holder (25) at a distal end and having a grip (10) at a rear end, the second lever being turnably supported on the first lever (2);
wherein the brittle material pressing component (115) has:
an elastically deformable pressing plate (116) having less rigidity than the brittle material and being capable of coming in contact with the primary surface of the side of the brittle material plate on which the segmenting groove is not formed; and
a pressing plate support part (117) for supporting the pressing plate (116) on the first lever (2) and pressing the pressing plate (116) against the brittle material; and wherein the brittle material holder (25) has:
an elastically deformable elastic plate (26) capable of coming in contact with the primary surface of the side of the brittle material on which the segmenting groove is formed, extending a predetermined length in a left-to-right direction intersecting the segmenting groove, and having less rigidity than the brittle material; and
an elastic plate support part (27) for supporting the left and right ends of the elastic plate (26) on the second lever (3).

10. The brittle material pliers as recited in claim 9, wherein
the pressing plate support part (117) has a single first support member (118) for supporting the left-to-right center of the pressing plate (116); and
the elastic plate support part (27) has a pair of second support members (131) for supporting the left and right sides of the elastic plate (26).

11. The brittle material pliers as recited in claim 9 or 10, wherein the pressing plate support part (117) further has a pressure shaft (119) for turnably supporting the first support member (118) on the first lever (2), the pressure shaft (119) being provided so as to extend to the left and right at the distal end of the first lever (2).

12. The brittle material pliers as recited in claim 11 , further comprising a turning regulator (7b) for regulating the turning of the first support member (118) to within a predetermined angle range.

13. The brittle material pliers as recited in any of claims 9 through 12, further comprising a brittle material positioning member (34) for positioning the brittle material inserted between the pressing plate (116) and the elastic plate (26), the brittle material positioning member being provided to the first lever (2) or the second lever (3).

14. The brittle material pliers as recited in claim 10, wherein the elastic plate support part (27) has a support shaft (30) provided at the distal end of the second lever (3) and extending in the left-to-right direction, the elastic plate support part being capable of turning around the axial center of the support shaft (30).
